# FASCICULE DE BREVET EUROPEEN

(11) **EP 3 479 446 B1**
(45) Date de publication et mention de la délivrance du brevet: **01.04.2020**
(21) Numéro de dépôt: 17745403.0
(22) Date de dépôt: 28.06.2017
(51) Int. Cl.: H02G 1/14, H02G 15/18

(54) **POIGNÉE CAME POUR MISE EN PLACE D'UN MANCHON RÉTRACTABLE À FROID À L'EXTRÉMITÉ D'UN CÂBLE OU AUTOUR D'UNE JONCTION ENTRE DEUX CÂBLES**
NOCKENGRIFF ZUR MONTAGE EINER KALTSCHRUMPFHÜLSE AUF DEM ENDE EINES KABELS ODER UM EINE VERBINDUNG ZWISCHEN ZWEI KABELN
CAM GRIP FOR FITTING A COLD-SHRINK SLEEVE ONTO THE END OF A CABLE OR AROUND A JUNCTION BETWEEN TWO CABLES

(30) Priorité: 29.06.2016 FR 1656091
(43) Date de publication de la demande: 08.05.2019
(73) Titulaire: Nexans, 92400 Courbevoie (FR)
(72) Inventeur: LOUIS, Valentin, 08140 Villers-Cernay (FR); CARPENTIER, Ludovic, 08200 Floing (FR)
(74) Mandataire: Tessier, Benoit Sebastien
(86) Numéro de dépôt international: PCT/FR2017/051723
(87) Numéro de publication internationale: WO 2018/002516

(56) Documents cités:
- EP-A1- 2 284 972
- WO-A1-2005/067116
- DE-A1- 3 529 550
- US-A- 1 434 437
- US-A- 2 134 345
- US-A1- 2004 171 290

## Description

### DOMAINE DE L'INVENTION

L'invention se rapporte au domaine général des câbles électriques, des câbles électriques moyenne tension destinés à être enterrés notamment. Elle se rapporte plus particulièrement aux opérations de raccordement des câbles électriques entre eux ou encore aux opérations de mise en place d'une terminaison à l'extrémité d'un câble.

### CONTEXTE DE L'INVENTION - ART ANTERIEUR

Lorsqu'on effectue le raccordement deux câbles électriques par leurs extrémités ou encore lorsque l'on met en place un élément de terminaison à l'extrémité d'un câble, il est connu d'utiliser, une fois la connexion réalisée ou la terminaison mise en place, de mettre en place un manchon protecteur destiné à restaurer la continuité de la gaine protectrice qui entoure le conducteur.

De manière connue, on utilise pour cette opération un manchon protecteur, rétractable à froid, réalisé dans un matériau plastique élastique, tel que du caoutchouc EPMD par exemple. Ce manchon est destiné à venir se rétracter sur le câble à l'endroit de la connexion ou de la terminaison, ses extrémités enserrant la paroi de la gaine de protection autour de la zone où celle-ci a été interrompue pour réaliser la connexion ou la terminaison. Pour ce faire le diamètre du manchon au repos est inférieur au diamètre des câbles enrobés de leurs gaines de protection.

Par suite, pour mettre un manchon rétractable à froid en place sur un câble, on utilise, de manière connue, un outillage permettant de distendre provisoirement le manchon pour accroitre son diamètre intérieur de façon à pouvoir l'enfiler autour des câbles. Cet outillage consiste généralement en un tube support, sur la paroi externe duquel on place le manchon, et d'un levier d'extraction qui permet de faire glisser le manchon sur la paroi du tube support, de façon à le séparer du manchon.

Le diamètre intérieur du tube support est légèrement supérieur au diamètre externe du câble, de sorte que la mise en place du manchon autour des sections de câbles à protéger (i.e. la zone de raccordement des deux câbles) consiste à enfiler le tube support entouré du manchon sur le câble puis, lorsque le tube support est correctement positionné autour de la section à protéger, à exercer une action sur le levier d'extraction en maintenant le manchon en position, de façon à faire coulisser le tube support entre le manchon et la paroi externe du câble et libérer le manchon.

Le manchon ainsi libéré tend à reprendre son diamètre de repos de sorte qu'il enserre le câble et rétablit la continuité de la gaine protectrice tout en assurant l'étanchéité dans la zone de jonction.

Un tel outillage de mise en place d'un manchon rétractable à froid existe sous plusieurs formes connues. Cependant les outillages utilisés présentent différents inconvénients qui tiennent généralement au moyen mis en œuvre pour effectuer la séparation du manchon et du tube support, ce moyen s'avérant généralement peu pratique à employer et peu efficace de sorte qu'il nécessite l'exercice d'une force significative pour séparer le manchon du support.

Le document de brevet EP2284972 divulgue un ensemble de pose d'un manchon élastique rétractable à froid pour la terminaison d'un câble électrique ou la jonction de deux câbles électriques, ledit ensemble de pose comportant un tube support autour duquel ledit manchon est monté longitudinalement en expansion, et un organe de retrait relié à une extrémité du tube support et comportant une partie de préhension permettant le retrait manuel dudit tube support par translation longitudinale relative du manchon et du tube support, et le serrage par rétractation dudit manchon autour de ladite terminaison ou de ladite jonction. Selon EP2284972, la partie de préhension constitue un levier actionnable en rotation autour d'un axe orthogonal à l'axe longitudinal du tube support, et l'organe de retrait comporte une deuxième partie reliée mécaniquement à la partie de préhension, ladite deuxième partie étant apte à venir en butée contre le tube support et une extrémité du manchon et à pousser ledit manchon selon une translation longitudinale le long du support commandée par la rotation dudit levier.

### PRESENTATION DE L'INVENTION

Un but de l'invention est de proposer un outillage permettant de faciliter la mise en place d'un manchon rétractable à froid sur l'extrémité d'un câble ou sur la zone de jonction entre deux câbles.

Un autre but de l'invention est de proposer un moyen permettant d'assurer le bon positionnement des éléments de jonction d'un manchon rétractable à froid sur la zone de jonction entre deux câbles.

A cet effet l'invention a pour objet un outillage pour la mise en place d'un manchon de protection rétractable à froid sur un câble, ledit outillage comportant:
- un tube support sur lequel le manchon est destiné à être placé de sorte qu'une zone d'extrémité du tube support s'étende au-delà du manchon, le tube support s'étendant le long d'un axe longitudinal,
- une embase d'appui configurée pour venir entourer au moins partiellement le corps du tube support et prendre appui sur un bord d'extrémité du manchon,
- un levier d'extraction comportant une zone de fixation permettant de monter le levier sur le tube support, le levier étant monté mobile en rotation autour d'un axe transversal perpendiculaire à l'axe longitudinal, ledit levier comprenant une came configurée pour prendre appui sur l'embase et glisser sur la surface d'appui de l'embase lorsque le levier d'extraction est basculé autour de l'axe transversal de sorte que le tube support translate le long de son axe longitudinal par rapport au manchon.

Selon diverses disposition, considérées seules ou en combinaison avec une ou plusieurs autre dispositions, le dispositif selon l'invention peut présenter diverse caractéristiques techniques additionnelles. Ainsi:
Selon une disposition particulière, le levier d'extraction comporte une barre de préhension frontale, centrale, prolongée latéralement par deux leviers jumelés. Lesdits leviers présentent chacun une extrémité comportant un ergot cylindrique, les deux ergots étant configurés et agencés l'un vis-à-vis de l'autre de façon à venir s'insérer dans des orifices diamétralement opposés, ménagés dans la paroi du tube support à proximité d'une de ses extrémités, de façon à ce que le levier d'extraction soit mobile en rotation autour d'un axe perpendiculaire à l'axe longitudinal du tube support. Lesdits leviers jumelés sont agencés de telle façon que chacun des leviers puisse venir s'appuyer, par un de ses bords, sur la surface de l'embase lorsque cette dernière est placée, autour du tube support de sorte que le bord d'appui de chaque levier forme une came qui vient glisser sur la surface de l'embase lorsque le levier d'extraction est en rotation et qui imprime un mouvement de translation longitudinal du tube support vis-à-vis de l'embase.

Selon un mode de réalisation, l'embase forme une couronne plane configurée pour venir entourer au moins partiellement le corps du tube support et qui définit deux pistes rectilignes disposées symétriquement par rapport à l'axe longitudinal du tube support et agencées de façon à ce que chacun des leviers jumelés puisse venir s'appuyer par un bord d'appui sur une des pistes de l'embase lorsque cette dernière est placée, autour du tube support.

Selon un mode de réalisation, la longueur de la zone d'extrémité du tube support est définie de telle façon que, lorsque le manchon est mis en place, l'embase étant placée autour du tube support et prenant appui sur l'extrémité du manchon, le levier d'extraction soit disposé vis-à-vis de l'embase de telle façon les bords d'appui des leviers jumelés restent en permanence en contact de la surface de l'embase et glissent le long de cette surface lorsque le levier d'extraction est actionné en rotation depuis une position initiale vers une position finale entrainant un déplacement longitudinal du tube support par rapport à l'embase.

Selon une caractéristique particulière, le profil présenté par le bord d'appui de chacun des leviers jumelés suite une courbe présentant un rayon de courbure qui croit sur la longueur du bord d'appui depuis son extrémité libre par laquelle le levier s'articule avec le tube support, la variation du rayon de courbure étant définie de façon à ce que, lorsque le levier d'extraction est en rotation, le mouvement de translation longitudinal imprimé au tube support ait une amplitude donnée.

Selon un mode de réalisation, le levier d'extraction comporte une barre de préhension cylindrique et deux flancs. Le bord de chacun des flancs destiné à venir en appui sur l'embase présente, sur une partie de sa longueur et jusqu'au niveau de l'extrémité par laquelle il s'articule avec le tube support, un profil en forme de came. Ce profil est défini de façon à ce que, lorsque le levier d'extraction est en rotation, le mouvement de translation longitudinal imprimé au tube support ait une amplitude définie.

Selon un mode de réalisation, le levier d'extraction est constitué d'une tige métallique conformée pour constituer une partie rectiligne frontale, centrale, formant une zone de préhension, prolongée par deux prolongements latéraux symétriques, formant deux leviers jumelés, comportant chacun un segment de liaison, les segments de liaison et la partie frontale étant disposés dans un même plan. Chaque segment de liaison est prolongé par un segment courbe, disposé dans un plan perpendiculaire au plan du segment de liaison et formant un bord d'appui avec un profil en came. L'extrémité du segment courbe est conformée pour constituer l'ergot venant s'insérer dans l'ouverture correspondante du tube support.

Selon une caractéristique particulière, l'embase comporte au niveau de son bord externe des replis latéraux orientés sensiblement perpendiculairement à la surface d'appui, destinés à maintenir le bord d'appui de chaque levier sur la piste sur laquelle il est destiné à glisser.

Selon une caractéristique particulière, le tube support étant réalisé dans un matériau élastique, il comporte une ouverture longitudinale permettant, après la mise en place du manchon, de le détacher du câble.

Selon un mode de réalisation particulier, l'extrémité de chacun des leviers jumelés formant un ergot qui vient s'insérer dans le tube support, est flanquée d'une rondelle frein assurant le maintien en place de l'extrémité du segment dans le tube support.

L'invention a également pour objet un procédé pour réaliser la mise en place d'un manchon de protection, du type rétractable à froid, sur un câble au moyen du dispositif selon l'invention, ledit procédé comportant:
- une première étape de mise en place du tube support équipé du manchon sur le câble, à l'endroit prévu;
   Une deuxième étape de mise en place de l'embase et du levier d'extraction sur le tube support;
- une troisième étape d'actionnement du levier d'extraction pour extraire le tube support;
- une quatrième étape de rebasculement (basculement arrière) du levier d'extraction dans sa position initiale.
- une cinquième étape d'extraction complète du tube support hors du manchon;
- une étape finale de retrait du tube support du câble;
lesdites étapes étant mises en œuvre par un opérateur.

Selon une disposition particulière, l'étape de mise en place de l'outillage équipé d'un manchon sur le câble consiste à enfiler le tube support sur le câble jusqu'à l'endroit prévu, à positionner l'embase autour du tube support de telle façon qu'elle vienne en butée sur le bord d'extrémité du manchon, et le cas échéant à monter le levier d'extraction à l'extrémité du tube support, en le faisant pivoter jusqu'à ce que les bords d'appui des leviers jumelés entrent en contact avec sur la surface de l'embase.

Selon une disposition particulière, l'étape d'actionnement du levier d'extraction est réalisée par l'opérateur dont une main maintient le manchon en position fixe et dont l'autre main actionne le levier pour coulisser le tube support le long de son axe longitudinal de façon à le séparer du manchon.

Selon une disposition particulière, la quatrième étape de séparation complète est réalisée par ledit opérateur en remettant le levier d'extraction en position initiale et en tirant sur le levier (16) axialement d'une main, tandis que l'autre main maintient le manchon (13) en position fixe.

De par sa composition en plusieurs composants liés entre eux par un principe de « came à évolution d'effort», l'outillage selon l'invention présente l'avantage d'avoir une ergonomie améliorée par rapport aux outillages de structure similaire actuellement disponibles. En effet du fait de la structure de l'outillage selon l'invention et en particulier du fait de la forme originale du levier et du rapport de démultiplication qu'elle permet d'obtenir, la force nécessaire à exercer sur le levier d'extraction est avantageusement plus faible. Ceci permet à l'opérateur de n'utiliser qu'une seule main, l'autre main pouvant être utilisée pour maintenir le manchon en place pendant sa séparation du tube support.

Par ailleurs la force d'extraction est avantageusement appliquée d'une manière plus continue de sorte que la séparation complète du manchon et du tube support s'effectue sans rupture.

En outre, le levier d'extraction étant solidaire du tube support, l'outillage selon l'invention est plus facile à mettre en œuvre que les outillages de structure similaire actuellement disponibles.

De même, l'agencement du levier vis-à-vis du tube support permet d'utiliser l'outillage selon l'invention même si l'espace entourant le câble considéré n'est que partiellement accessible.

Enfin, l'outillage selon l'invention, présente l'avantage, tout en étant robuste et d'un coût de fabrication réduit, de permettre à l'opérateur de gagner du temps sur l'opération de mise en place d'un manchon protecteur, rétractable à froid, sur un câble.

### DESCRIPTION DES FIGURES

Les caractéristiques et avantages de l'invention seront mieux appréciés grâce à la description qui suit, description qui s'appuie sur l'exemple de réalisation illustré par les figures annexées qui représentent:
- les figures 1 et 2, des vues schématiques, de profil, présentant le tube support du dispositif selon l'invention;
- les figures 3 à 5, des vues schématiques présentant, sous différents angles, le levier d'extraction du dispositif selon l'invention;
- les figures 6 et 7, des vues schématiques présentant l'embase d'appui du dispositif selon l'invention;
- les figures 8 à 10, des vues schématiques illustrant le principe de fonctionnement du dispositif selon l'invention;
- la figure 11, une illustration de l'opération de séparation complète du tube support et du manchon.

Il est à noter que sur l'ensemble des figures et sauf nécessité contraire, un même élément fonctionnel ou structurel porte un même repère de référence.

Il est à noter également que sur les diverses illustrations, les différents éléments ne sont pas nécessairement représentés dans leur tailles respectives réelles; les échelles n'étant pas nécessairement respectées.

### DESCRIPTION DETAILLEE

Le choix de l'exemple de réalisation exposé dans la suite de la description a pour seul objet de mettre en évidence les caractéristiques techniques avantageuses de l'invention. Il n'a pas, en particulier, pour objet de limiter l'invention à ce seul exemple, la portée ou l'étendue de l'invention étant définies par les revendications annexées à la description.

Comme cela a été dit précédemment, le dispositif selon l'invention, quelle que soit la forme de réalisation considérée comporte principalement:
- un tube support 12 sur lequel le manchon 13 est destiné à être placé;
- une embase d'appui 15;
- un levier d'extraction 16 configuré pour être monté mobile en rotation sur une extrémité du tube support et pour venir prendre appui sur l'embase 15.

Selon l'invention, le tube support 12 est un élément tubulaire de section circulaire dont le diamètre interne est défini de façon à ce qu'il puisse coulisser le long du câble 14 auquel il sert d'outillage. Ce diamètre est par ailleurs défini de telle façon que lorsque le manchon de protection 13, destiné à être mis en place sur le câble 14, est monté sur le tube support 12, il est étiré diamétralement.

L'épaisseur de sa paroi est quant à elle définie de façon à ce que le tube support 12 présente une rigidité suffisante pour maintenir élargi le diamètre du manchon 13.

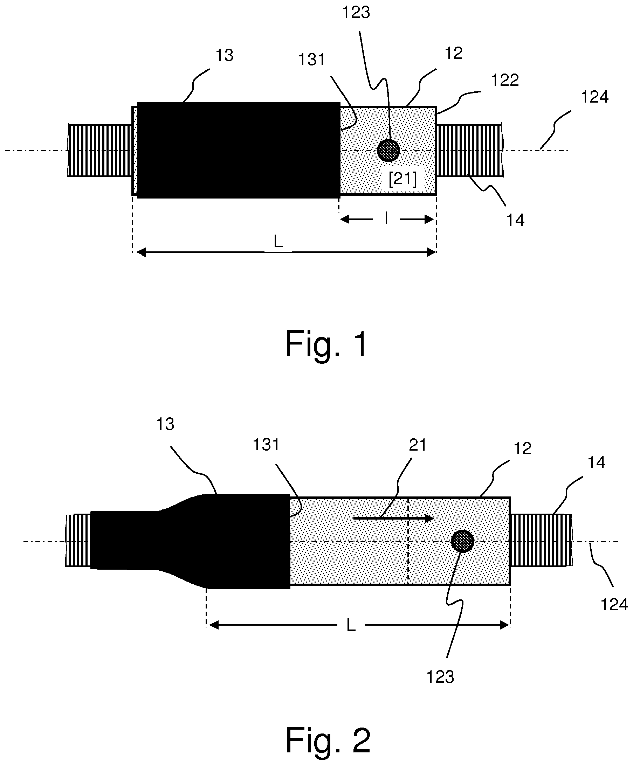

Du point de vue de sa longueur L, le tube support 12 est dimensionné de telle façon que lorsque le manchon 13 est mis en place, comme illustré par la figure 1, le tube reste découvert sur une portion 121 de longueur minimale l, ou zone de réserve, la zone de réserve étant destinée à l'assemblage sur le tube support 12 des autres éléments de l'outillage de mise en place selon l'invention.

Par ailleurs, le tube support présente, au niveau de la zone de réserve 121, au voisinage de son extrémité 122, une zone d'articulation qui permet de relier le levier d'extraction 16 au tube support 12. Dans l'exemple de réalisation décrit ici à titre d'exemple, le tube support 12 comporte à cet effet deux orifices 123 diamétralement opposés, sensiblement circulaires, dont le rôle est décrit dans la suite du texte.

D'un point de vue fonctionnel, le tube support 12 a pour fonction connue de permettre la mise en place du manchon de protection 13 sur le câble 14. En effet, le manchon de protection 13 est généralement destiné à rétablir la continuité de la gaine de protection qui recouvre normalement le câble 14, dans la zone où une jonction ou une terminaison a été mise en place. C'est pourquoi il est réalisé dans un matériau présentant une certaine élasticité, du caoutchouc EPD par exemple, et présente un diamètre légèrement inférieur au diamètre externe du câble 14.

De la sorte, lorsqu'il est mis en place sur le câble, il assure une pression sur la paroi externe de ce dernier. Cette pression contribue à maintenir le manchon 13 en place et garantit l'étanchéité du gainage du câble dans la zone où le manchon vient se substituer à la gaine de protection qui enrobe normalement le câble.

Par suite, pour mettre le manchon 13 en place sur le câble 14 on le place en premier lieu sur le tube support 12, puis on enfile le tube support 12 sur le câble 14. Puis, en second lieu, on sépare le tube support 12 du manchon 13 en maintenant celui-ci en position fixe et en exerçant une traction sur le tube support 12 le long de son axe longitudinal 124, traction matérialisée par la flèche 21 sur la figure 2. Ainsi du fait du retrait progressif du tube support 12, le manchon 13 reprend progressivement son diamètre normal et vient se plaquer sur la paroi du câble 14.

Le levier d'extraction 16 présente une extrémité libre par laquelle il est actionné. Il est en outre relié au tube support 12, de préférence à proximité de l'extrémité 122 de ce dernier, de telle façon qu'il puisse pivoter autour d'un axe 165 qui coupe l'axe longitudinal 124 du tube support 12 tout en étant perpendiculaire à cet axe.

Par ailleurs il est configuré pour prendre appui sur le manchon de protection 13 de façon à ce que sa mise en rotation autour de l'axe 164 entraine un coulissement du tube support 12 vis-à-vis du manchon 13 tendant à séparer ces derniers. Selon l'invention le levier d'extraction 16 prend appui sur le manchon 13 par l'intermédiaire de l'embase 15 qui est configurée pour assurer cet appui sans risquer d'endommager le manchon 13.

Le levier d'extraction 16 est quant à lui configuré pour que son mouvement de rotation autour de l'axe 164 associé à l'appui sur l'embase 15 entraine le tube support 12 en translation le long de son axe longitudinal.

A cet effet il comporte principalement un bras de levier comportant une section distale, ou segment de liaison, sur laquelle est appliquée la force permettant de faire pivoter le levier et un segment proximal, ou segment d'appui, au niveau duquel le bras de levier prend appui sur l'embase 15, et s'étendant entre le segment distal et l'extrémité par laquelle le levier 16 est articulé en rotation avec le tube support 12.

Selon l'invention, le segment proximal comporte un bord d'appui qui glisse sur la surface de l'embase 15 lorsque le levier 16 est actionné. Ce bord d'appui présente un profil en forme de came évolutive, qui permet avantageusement de convertir le mouvement de rotation du levier d'extraction 16 en une force qui évolue en fonction de la distance parcourue, force dirigée suivant l'axe longitudinal du tube support et qui entraine ce dernier dans un mouvement de translation.

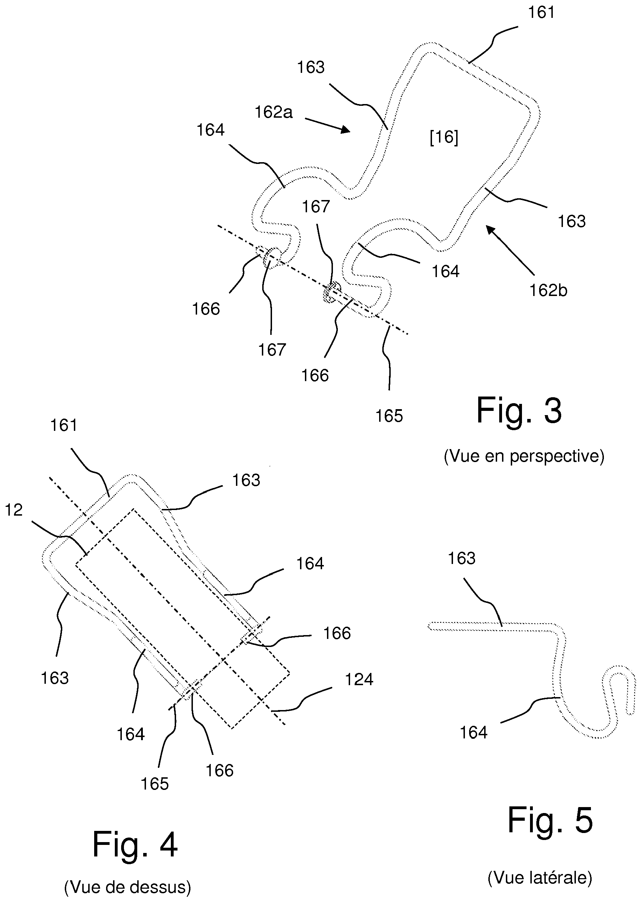

Les figures 3 à 5 illustrent une forme de réalisation particulière du levier d'extraction 16 selon l'invention. Dans cette forme de réalisation le levier d'extraction 16 est constitué par un fil métallique de diamètre approprié, conformé pour présenter un partie frontale centrale 161, formant une barre de préhension par laquelle l'opérateur actionne le levier 16, ainsi que deux prolongement latéraux 162 (162a et 162b) symétriques l'un de l'autre formant deux leviers jumelés. Chaque levier 162 comporte un segment de liaison 163 relié par une de ses extrémités à la barre de préhension 161 et prolongé par un segment d'appui 164 destiné à venir prendre appui sur la surface de l'embase 15. Les segments de liaison 163 et la barre de préhension 161 sont préférentiellement disposés dans un même plan. Le segment d'appui 164 de chaque levier 162 s'étend dans un plan perpendiculaire à la barre de préhension 161 et présente un profil en forme de came évolutive, comme illustré par les figures 3 et 5. Ce profil est défini de telle façon que le rayon de courbure d'un segment d'appui 164 diminue à mesure que l'on s'approche de l'extrémité libre du segment d'appui, autrement dit l'extrémité du segment d'appui 164 qui n'est pas liée au segment de liaison 163.

La valeur maximale du rayon de courbure est par ailleurs déterminée de telle façon que le pivotement complet du levier d'extraction 16, depuis une position dite "de départ" où les segments d'appui 164 de deux leviers jumelés et sont en contact avec la surface de l'embase d'appui 15 dans la zone pour laquelle le rayon de courbure est le plus faible, vers une position dite "d'arrivée" où ces mêmes segments 164 sont en contact avec la surface de l'embase d'appui 15 dans la zone pour laquelle le rayon de courbure est le plus important, entraine un déplacement maximal du tube support 12 le long de son axe longitudinal.

L'amplitude maximale du déplacement du tube est déterminée de telle façon qu'elle entraine un désengagement du tube support 12 hors du manchon 13, sur une distance suffisante pour que le tube puisse être ensuite complètement désengagé du manchon par simple traction au niveau de son extrémité 122.

Dans cette forme de réalisation, les extrémités des segments d'appui 164 des deux leviers jumelés 162 sont conformées pour former deux prolongements 166 se faisant face, orientés sensiblement selon l'axe 165 de pivotement du levier d'extraction 16. Ces deux prolongements 166 forment deux ergots cylindriques destinés à venir se loger dans les orifices 123 du tube d'appui 12 lorsque le levier d'extraction 16 est monté sur l'extrémité de ce dernier.

Dans une forme de réalisation préférée les extrémités des ergots 166 sont équipées d'une rondelle frein borgne 167 qui permet de maintenir les ergots 166 en place à l'intérieur des orifices 123 du tube support. Dans cette forme de réalisation, les orifices 123 sont dimensionnés de façon à ce que les rondelles montées sur les ergots 166 puissent les traverser.

L'exemple de réalisation présenté ici, qui montre un levier d'extraction 16 constitué d'un fil métallique conformé, ne constitue bien entendu qu'une forme possible de réalisation de ce levier. En particulier il est bien entendu possible, par exemple, de concevoir de manière alternative un levier d'extraction 16 constitué de deux éléments, de type flasque, reliés l'un à l'autre par une barre centrale, les deux flasques présentant un bord d'appui suivant un profil en forme de came et ayant le même rôle fonctionnel que les segments d'appui 164 décrits précédemment.

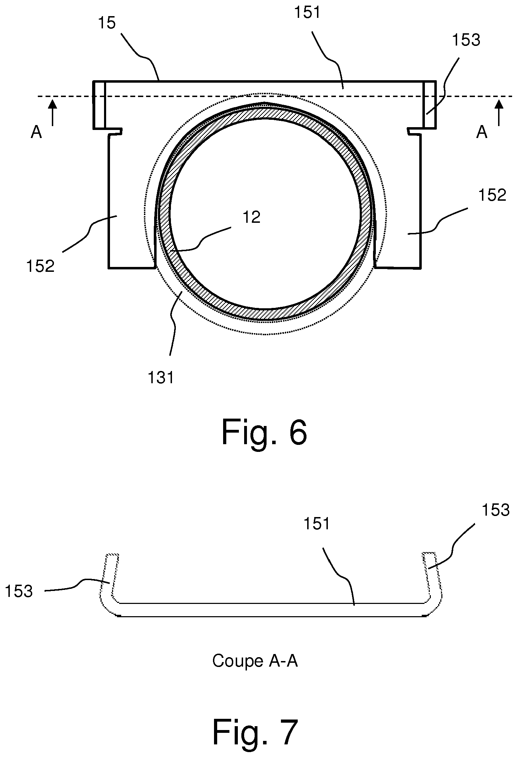

Les figures 6 et 7 permettent de décrire en s'appuyant sur l'exemple de réalisation considéré, les caractéristiques de structure de l'embase d'appui 15 de l'outillage selon l'invention.

De manière générale et indépendamment de la forme de réalisation considérée, l'embase a pour fonction de permettre au levier d'extraction 12 de prendre appui sur le manchon 13, sur son bord d'extrémité 131 en particulier, pour extirper le tube support hors du manchon et libérer celui-ci, de façon à ce qu'il vienne se plaquer sur la surface externe du câble en tendant à reprendre son diamètre interne nominal.

A cet effet, elle présente, de manière préférentielle, une structure plane globalement coronale formant une surface d'appui entourant au moins partiellement la paroi externe du tube support 12 et s'étendant en périphérie du tube support. Elle présente une découpe intérieure en arc de cercle dont le diamètre est sensiblement égal au diamètre du tube support 12 comme l'illustre la figure 6.

Dans l'exemple de réalisation décrit, la surface d'appui présente une partie frontale 151 reliant deux prolongement latéraux 152 se faisant vis-à-vis et formant deux pistes sur lesquelles les segments d'appui 164 des deux leviers jumelés 162 viennent prendre appui et glisser lorsque l'outil est mis en place et que le levier 16 est pivoté. Par ailleurs afin de renforcer le maintien en place des deux leviers jumelés 162 au niveau de l'embase 15, lorsque ces derniers glissent en prenant appui sur les pistes 152 de la surface d'appui, l'embase 15 présente de manière préférentielle, au niveau de la partie frontale 151 de la surface d'appui, deux replis 153 qui viennent border les entrées des deux pistes 152. Une telle disposition permet avantageusement d'empêcher les segments d'appui 164 deux leviers 162 de s'écarter l'un de l'autre lorsque l'opérateur fait pivoter le levier d'extraction 16.

Il est à noter que, dans la mesure où la découpe centrale de la surface d'appui de l'embase 15 présente un diamètre sensiblement égal au diamètre extérieur du tube support, l'embase 15 peut avantageusement être placée autour du tube support de façon à prendre appui sur le bord d'extrémité 131 du manchon 13 par la face opposé à celle constituant la surface d'appui. L'appui du levier d'extraction 16 sur le manchon 13 est ainsi naturellement constitué.

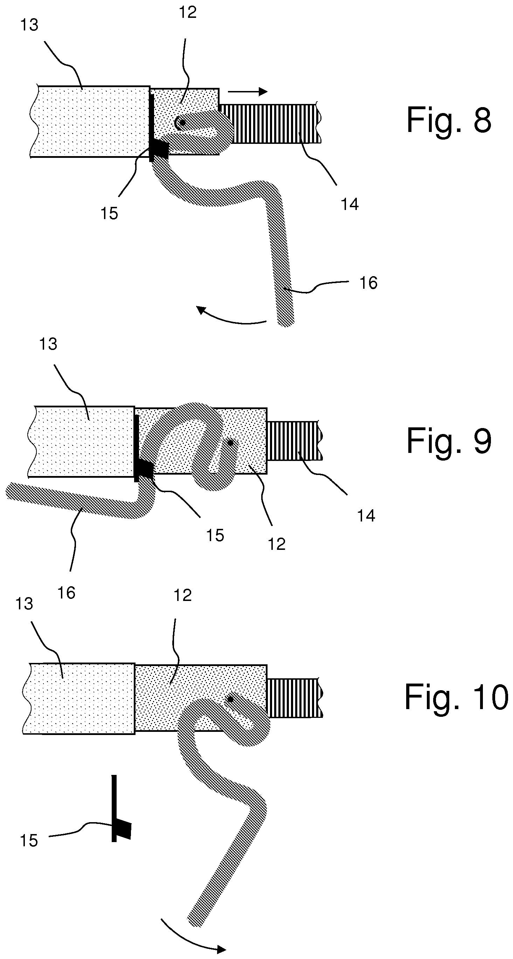

Les figures 8 à 11 illustrent le principe de fonctionnement et les étapes de mise en œuvre de l'outillage selon l'invention.

La première étape, illustrée par la figure 8, consiste à mettre l'outillage en place sur le câble 14. Elle consiste plus précisément à enfiler le tube support 12, sur lequel le manchon 13 a été mis en place, sur le câble 14 jusqu'à ce que le manchon 13 soit positionné autour du câble, à l'endroit où il est appelé à assurer la protection de celui-ci.

La deuxième étape, illustrée par la figure 8 également, consiste ensuite à mettre en place l'embase 15 autour du tube support 12, en appui contre le bord d'extrémité du manchon 13, puis enfin à monter le levier d'extraction 16 sur l'extrémité du tube support en insérant les extrémités 166 des segments d'appui 164 des deux leviers jumelés dans le orifices 123 du tube support 12. Elle consiste également à positionner le levier d'extraction 16 en position initiale. Les segments d'appui 164 sont alors en contact avec la surface d'appui de l'embase 15 au niveau de leurs zones de plus faible rayon de courbure.

La troisième étape illustrée par la figure 9, consiste quant à elle à actionner le levier d'extraction 16, en le basculant de la position initiale à la position final. A l'issue de cette étape, le tube support 12 est en position de retrait partiel, prêt à être extrait du manchon 13 par simple traction.

La quatrième étape, illustrée par la figure 10, consiste à rebasculer le levier extracteur dans sa position initiale, de sorte qu'il ne soit plus en contact avec l'embase d'appui 15 et/ou avec le bord d'extrémité 131 du manchon 13. L'embase d'appui 15 est alors retirée.

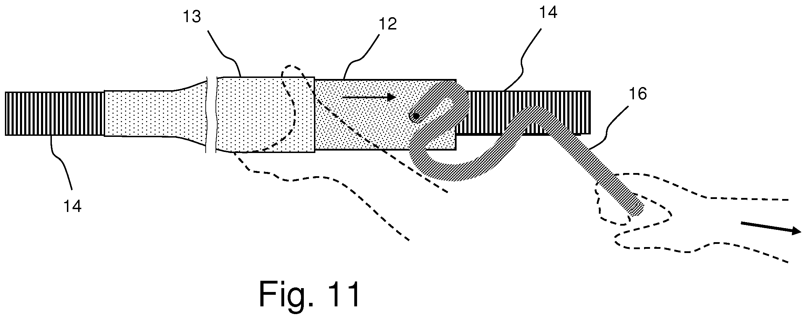

La cinquième étape, illustrée par la figure 11, consiste alors pour l'opérateur à exercer d'une main une traction sur l'extrémité du tube support 12 à l'aide du levier 16, tout en maintenant en place le manchon 13 de l'autre main, jusqu'à ce que le manchon 13 et le tube support 15 soient complètement séparés.

A l'issue de la cinquième étape le manchon 13 est en place et l'outillage peut être retiré du câble.

Il est à noter que dans un mode de réalisation préféré, le tube support 12 présente une fente longitudinale (non représentée sur les figures) ménagée sur toute la longueur de la paroi, qui permet de détacher plus facilement le tube support 12 du câble 14 après mise en place du manchon 13. Ainsi selon que le manchon 13 est installé au niveau d'une zone terminale ou d'une zone de jonction, le tube support peut être retiré du câble soit en le passant par l'extrémité dudit câble soit par extraction latérale en faisant passer le câble par la fente longitudinal en jouant sur l'élasticité du matériau qui constitue le tube support 12 pour écarter les bords de la fente longitudinale suffisamment pour que le câble puisse s'y insérer.

Il est également proposé un outillage pour la mise en place d'un manchon de protection, rétractable à froid, sur un câble, ledit outillage comportant:
- un tube support sur lequel le manchon est destiné à être placé, dont le diamètre intérieur est dimensionné de telle façon qu'il puisse coulisser le long du câble, la longueur du tube support étant définie de façon à ce que ce dernier comporte une zone d'extrémité délimitée par un des bords d'extrémités du manchon et une extrémité du tube support,
- une embase d'appui formant une couronne plane, configurée pour venir entourer au moins partiellement le corps du tube support dans la zone d'extrémité et prendre appui sur le bord d'extrémité du manchon qui limite cette zone d'extrémité; et
- un levier d'extraction comportant une zone de fixation qui permet de monter le levier sur le tube support, le levier étant monté mobile en rotation autour d'un axe perpendiculaire à l'axe longitudinal du tube support.

Ledit levier est un levier à came configuré pour que la came vienne prendre appui sur l'embase et glisse sur la surface d'appui de l'embase lorsque le levier d'extraction est basculé autour de son axe d'une position initiale vers une position finale. Le glissement de la came est tel qu'il entraine un mouvement de translation du tube support le long de son axe longitudinal qui écarte l'extrémité du tube support limitant la zone d'extrémité du bord d'extrémité du manchon limitant cette même zone.

## Revendications

1. Outillage pour la mise en place d'un manchon de protection (13) rétractable à froid sur un câble (14), comportant:
- un tube support (12) sur lequel le manchon (13) est destiné à être placé de sorte qu'une zone d'extrémité (121) du tube support (12) s'étende au-delà du manchon (13), le tube support (12) s'étendant le long d'un axe longitudinal (124),
- une embase d'appui (15) configurée pour venir entourer au moins partiellement le corps du tube support (12) et prendre appui sur un bord d'extrémité (131) du manchon (13),
- un levier d'extraction (16) comportant une zone de fixation (166) permettant de monter le levier (16) sur le tube support (12), le levier étant monté mobile en rotation autour d'un axe transversal (165) perpendiculaire à l'axe longitudinal (124), ledit levier comprenant une came configurée pour prendre appui sur l'embase (15) et glisser sur la surface d'appui de l'embase (15) lorsque le levier d'extraction (16) est basculé autour de l'axe transversal (165) de sorte que le tube support (12) translate le long de son axe longitudinal (124) par rapport au manchon (13).

2. Outillage selon la revendication 1, **caractérisé en ce que** le levier d'extraction (16) comportant une barre de préhension (161) frontale, centrale, prolongée latéralement par deux leviers jumelés (162), lesdits leviers présentant chacun une extrémité (166) comportant un ergot cylindrique, les deux ergots étant configurés et agencés l'un vis-à-vis de l'autre de façon à venir s'insérer dans des orifices (123) diamétralement opposés, ménagés dans la paroi du tube support (12) à proximité d'une de ses extrémités, de façon à ce que le levier d'extraction (12) soit mobile en rotation autour d'un axe (165) perpendiculaire à l'axe longitudinal (124) du tube support (12); lesdits leviers jumelés (162) étant agencés de telle façon que chacun des leviers puisse venir s'appuyer, par un de ses bords, sur la surface de l'embase (15) lorsque cette dernière est placée, autour du tube support (12), le bord d'appui de chaque levier (162) formant une came qui vient glisser sur la surface de l'embase (15) lorsque le levier d'extraction (16) est en rotation et imprime un mouvement de translation longitudinal du tube support (12) vis-à-vis de l'embase (15).

3. Outillage selon la revendication 2, **caractérisé en ce que** l'embase (15) forme une couronne plane configurée pour venir entourer au moins partiellement le corps du tube support (12) et définissant deux pistes rectilignes (152) disposées symétriquement par rapport à l'axe longitudinal (124) du tube support (12), et agencées de façon à ce que chacun des leviers jumelés (162) puisse venir s'appuyer par un bord d'appui (164) sur une des pistes (152) de l'embase (15) lorsque cette dernière est placée, autour du tube support (12).

4. Dispositif selon l'une des revendications 2 ou 3, **caractérisé en ce que** la longueur de la zone d'extrémité (121) du tube support (12) est définie de telle façon que, lorsque le manchon (13) est mis en place, l'embase (15) placée autour du tube support (12) et prenant appui sur l'extrémité du manchon (13), le levier d'extraction (16) soit disposé vis-à-vis de l'embase (15) de telle façon les bords d'appui (164) des leviers jumelés (162) restent en permanence en contact de la surface de l'embase (15) et glissent le long de cette surface lorsque le levier d'extraction (16) est actionné en rotation depuis une position initiale vers une position finale entrainant un déplacement longitudinal du tube support (12) par rapport à l'embase (15).

5. Dispositif selon l'une quelconque des revendications 2 à 4, **caractérisé en ce que** le profil présenté par le bord d'appui (164) de chacun des leviers jumelés (162) suite une courbe présentant un rayon de courbure qui croit sur la longueur du bord d'appui depuis son extrémité libre (166) par laquelle le levier (162) s'articule avec le tube support (12), la variation du rayon de courbure étant définie de façon à ce que, lorsque le levier d'extraction (16) est en rotation, le mouvement de translation longitudinal imprimé au tube support (12) ait une amplitude donnée.

6. Dispositif selon l'une quelconque des revendications précédentes, **caractérisé en ce que** le levier d'extraction (16) comporte une barre de préhension cylindrique et deux flancs, le bord de chacun des flancs destiné à venir en appui sur l'embase (15) présentant, sur une partie de sa longueur et jusqu'au niveau de l'extrémité (166) par laquelle il s'articule avec le tube support (12), un profil en forme de came défini de façon à ce que, lorsque le levier d'extraction est en rotation, le mouvement de translation longitudinal imprimé au tube (12) support ait une amplitude définie.

7. Dispositif selon l'une quelconque des revendications 2 à 5, **caractérisé en ce que** le levier d'extraction est constitué d'une tige métallique conformée pour constituer un partie rectiligne frontale (161), centrale, formant une zone de préhension, prolongée par deux prolongements latéraux (162) symétriques, formant deux leviers jumelés, comportant chacun un segment de liaison (163), les segments de liaison (163) et la partie frontale (161) étant disposés dans un même plan, chaque segment de liaison (163) étant prolongé par un segment courbe (164), disposé dans un plan perpendiculaire au plan du segment de liaison (163), formant un bord d'appui avec un profil en came, l'extrémité du segment courbe (164) étant conformée pour constituer l'ergot (166) venant s'insérer dans l'ouverture (123) correspondante du tube support (12).

8. Dispositif selon la revendication 7, **caractérisé en ce que**, l'embase (15) comporte au niveau de son bord externe des replis latéraux (153) orientés sensiblement perpendiculairement à la surface d'appui, destinés à maintenir le bord d'appui (164) de chaque levier (162) sur la piste (152) sur laquelle il est destiné à glisser.

9. Dispositif selon l'une quelconque des revendications précédentes, **caractérisé en ce que** le tube support (12) étant réalisé dans un matériau présentant une élasticité suffisante, il comporte une ouverture longitudinale permettant, après la mise en place du manchon, de le détacher du câble (14).

10. Dispositif selon l'une des revendications 2 à 9, **caractérisé en ce que** l'extrémité de chacun des leviers jumelés (162) formant un ergot (166) venant s'insérer dans le tube support (12), comporte une rondelle frein assurant le maintien en place de l'extrémité (166) du segment (164) dans le tube support (12).

11. Procédé pour réaliser la mise en place d'un manchon de protection (13) sur un câble (14) au moyen du dispositif selon l'une quelconque des revendications 1 à 10, comportant:
- une première étape de mise en place du tube support (12) équipé du manchon (13) sur le câble (14), à l'endroit prévu;
- une deuxième étape de mise en place de l'embase (15) et du levier d'extraction (16) sur le tube support (12)
- une troisième étape d'actionnement du levier d'extraction (16);
- une quatrième étape de rebasculement du levier d'extraction (16) dans sa position initiale.
- une cinquième étape d'extraction complète du tube support (12) hors du manchon (13);
- une étape finale de retrait du tube support (12) du câble (14); lesdites étapes étant mises en œuvre par un opérateur.

12. Procédé selon la revendication 11, **caractérisé en ce que** l'étape de mise en place de l'outillage équipé d'un manchon (13) sur le câble consiste à enfiler le tube support (12) sur le câble (14) jusqu'à l'endroit prévu, à positionner l'embase (15) autour du tube support (12) de telle façon qu'elle vienne en butée sur le bord d'extrémité du manchon (13), et le cas échéant à monter le levier d'extraction (16) à l'extrémité du tube support (12), en le faisant pivoter jusqu'à ce que les bords d'appui (164) des leviers jumelés (162) entrent en contact avec sur la surface de l'embase (15).

13. Procédé selon la revendication 11 ou 12, **caractérisé en ce que** l'étape d'actionnement du levier d'extraction (16) est réalisée par l'opérateur dont une main maintient le manchon (13) en position fixe et dont l'autre main actionne le levier (16) pour coulisser le tube support (12) le long de son axe longitudinal (124) de façon à le séparer du manchon (13).

14. Procédé selon l'une des revendications 11 à 13, **caractérisé en ce que** la quatrième étape de séparation complète est réalisée par ledit opérateur en remettant le levier d'extraction (16) en position initiale et en tirant sur le levier (16) axialement d'une main, tandis que l'autre main maintient le manchon (13) en position fixe.

## Patentansprüche

1. Werkzeug zum Platzieren einer kaltschrumpfbaren Schutzhülse (13) auf einem Kabel (14), aufweisend:
- ein tragendes Rohr (12), auf welchem die Hülse (13) bestimmt ist, derart platziert zu sein, dass sich ein Endbereich (121) des tragenden Rohrs (12) jenseits der Hülse (13) erstreckt, wobei sich das tragende Rohr (12) entlang einer Längsachse (124) erstreckt,
- eine Stützbasis (15), die konfiguriert ist, um den Körper des tragenden Rohrs (12) mindestens teilweise zu umgeben und sich auf einem Endrand (131) der Hülse (13) abzustützen,
- einen Extraktionshebel (16), der einen Befestigungsbereich (166) aufweist, der erlaubt, den Hebel (16) auf dem tragenden Rohr (12) anzubringen, wobei der Hebel um eine transversale Achse (165), die senkrecht zur Längsachse (124) ist, rotatorisch beweglich angebracht ist, wobei der Hebel einen Nocken umfasst, der konfiguriert ist, um sich auf der Basis (15) abzustützen und auf der Stützfläche der Basis (15) zu gleiten, wenn der Extraktionshebel (16) um die transversale Achse (165) derart geschwenkt wird, dass sich das tragende Rohr (12) entlang seiner Längsachse (124) in Bezug auf die Hülse (13) verschiebt.

2. Werkzeug nach Anspruch 1, **dadurch gekennzeichnet, dass** der Extraktionshebel (16) eine zentrale frontale Greifstange (161) aufweist, die seitlich von zwei Zwillingshebeln (162) verlängert wird, wobei die Hebel jeweils ein Ende (166) aufweisen, das einen zylindrischen Sporn aufweist, wobei die zwei Sporne konfiguriert und derart gegenüber ausgebildet sind, dass sie in diametral gegenüberliegende Öffnungen (123) eingreifen, die in die Wand des tragenden Rohrs (12) in der Nähe von einem seiner Enden eingearbeitet sind, so dass der Extraktionshebel (12) um eine Achse (165), die senkrecht zur Längsachse (124) des tragenden Rohrs (12) ist, rotatorisch beweglich ist; wobei die Zwillingshebel (162) derart ausgebildet sind, dass sich jeder der Hebel mit einem seiner Ränder auf der Fläche der Basis (15) abstützen kann, wenn diese um das tragende Rohr (12) platziert ist, wobei der Stützrand jedes Hebels (162) einen Nocken bildet, der auf der Fläche der Basis (15) gleitet, wenn der Extraktionshebel (16) rotiert und eine Längs-Translationsbewegung des tragenden Rohrs (12) gegenüber der Basis (15) bewirkt.

3. Werkzeug nach Anspruch 2, **dadurch gekennzeichnet, dass** die Basis (15) einen ebenen Kranz bildet, der konfiguriert ist, um den Körper des tragenden Rohrs (12) mindestens teilweise zu umgeben und zwei gerade Pisten (152) definiert, die in Bezug auf die Längsachse (124) des tragenden Rohrs (12) symmetrisch angeordnet und derart ausgebildet sind, dass sich jeder der Zwillingshebel (162) mit einem Stützrand (164) auf einer der Pisten (152) der Basis (15) abstützen kann, wenn diese platziert ist, um das tragende Rohr (12).

4. Vorrichtung nach einem der Ansprüche 2 oder 3, **dadurch gekennzeichnet, dass** die Länge des Endbereichs (121) des tragenden Rohrs (12) derart festgelegt ist, dass, wenn die Hülse (13) platziert ist, die Basis (15) um das tragende Rohr (12) platziert ist und sich dabei auf dem Ende der Hülse (13) abstützt, der Extraktionshebel (16) gegenüber der Basis (15) derart angeordnet ist, dass die Stützränder (164) der Zwillingshebel (162) ständig mit der Fläche der Basis (15) in Kontakt bleiben und entlang dieser Fläche gleiten, wenn der Extraktionshebel (16) aus einer Ausgangsposition in eine Endposition rotatorisch betätigt wird, was eine Längsverlagerung des tragenden Rohrs (12) in Bezug auf die Basis (15) bewirkt.

5. Vorrichtung nach einem der Ansprüche 2 bis 4, **dadurch gekennzeichnet, dass** das Profil, das von dem Stützrand (164) von jedem der Zwillingshebel (162) dargestellt wird, einer Krümmung folgt, die einen Krümmungsradius aufweist, der über die Länge des Stützrandes ab seinem freien Ende (166), über das der Hebel (162) mit dem tragenden Rohr (12) gelenkig ist, zunimmt, wobei die Variation des Krümmungsradius derart festgelegt ist, dass, wenn der Extraktionshebel (16) rotiert, die auf das tragende Rohr (12) bewirkte Längs-Translationsbewegung eine bestimmte Amplitude hat.

6. Vorrichtung nach einem der vorangehenden Ansprüche, **dadurch gekennzeichnet, dass** der Extraktionshebel (16) eine zylindrische Greifstange und zwei Flanken aufweist, wobei der Rand jeder der Flanken, der bestimmt ist, sich auf der Basis (15) abzustützen, über einen Teil seiner Länge und bis zum Bereich des Endes (166), über das er mit dem tragenden Rohr (12) gelenkig ist, ein Profil in Nockenform aufweist, das derart festgelegt ist, dass, wenn der Extraktionshebel rotiert, die auf das tragende Rohr (12) bewirkte Längs-Translationsbewegung eine festgelegte Amplitude hat.

7. Vorrichtung nach einem der Ansprüche 2 bis 5, **dadurch gekennzeichnet, dass** der Extraktionshebel aus einem Metallstab besteht, die ausgebildet ist, um einen zentralen frontalen geraden Teil (161) darzustellen, der einen Greifbereich bildet, verlängert durch zwei symmetrische seitliche Verlängerungen (162), die zwei Zwillingshebel bilden, die jeweils ein Verbindungssegment (163) aufweisen, wobei die Verbindungssegmente (163) und der frontale Teil (161) in derselben Ebene angeordnet sind, wobei jedes Verbindungssegment (163) von einem Krümmungssegment (164) verlängert wird, das in einer Ebene senkrecht zur Ebene des Verbindungssegments (163) angeordnet ist, einen Stützrand mit einem Nockenprofil bildend, wobei das Ende des Krümmungssegments (164) ausgebildet ist, um den Sporn (166) darzustellen, der in die entsprechende Öffnung (123) des tragenden Rohrs (12) eingreift.

8. Vorrichtung nach Anspruch 7, **dadurch gekennzeichnet, dass** die Basis (15) im Bereich ihres äußeren Randes seitliche Faltungen (153) aufweist, die etwa senkrecht zur Stützfläche ausgerichtet sind, die bestimmt sind, den Stützrand (164) jedes Hebels (162) auf der Piste (152) zu halten, auf der er zu gleiten bestimmt ist.

9. Vorrichtung nach einem der vorangehenden Ansprüche, **dadurch gekennzeichnet, dass** das tragende Rohr (12), das aus einem Material hergestellt ist, das eine ausreichende Elastizität aufweist, eine Längsöffnung aufweist, die erlaubt, nach dem Platzieren der Hülse dieses vom Kabel (14) zu lösen.

10. Vorrichtung nach einem der Ansprüche 2 bis 9, **dadurch gekennzeichnet, dass** das Ende von jedem der Zwillingshebel (162), das einen Sporn (166) bildet, der in das tragende Rohr (12) eingreift, eine Bremsscheibe aufweist, die das Halten des Endes (166) des Segments (164) am Platz im tragenden Rohr (12) sichert.

11. Verfahren zum Platzieren einer Schutzhülse (13) auf einem Kabel (14) mit Hilfe der Vorrichtung nach einem der Ansprüche 1 bis 10, aufweisend:
- einen ersten Schritt des Platzierens des tragenden Rohrs (12), ausgestattet mit der Hülse (13), auf dem Kabel (14) an der vorgesehenen Stelle;
- einen zweiten Schritt des Platzierens der Basis (15) und des Extraktionshebels (16) auf dem tragenden Rohr (12);
- einen dritten Schritt des Betätigens des Extraktionshebels (16);
- einen vierten Schritt des Zurückschwenkens des Extraktionshebels (16) in seine Ausgangsposition;
- einen fünften Schritt des vollständigen Extrahierens des tragenden Rohrs (12) aus der Hülse (13);
- einen abschließenden Schritt des Lösens des tragenden Rohrs (12) vom Kabel (14);
wobei die Schritte von einem Bediener durchgeführt werden.

12. Verfahren nach Anspruch 11, **dadurch gekennzeichnet, dass** der Schritt des Platzierens des Werkzeugs, ausgestattet mit einer Hülse (13), auf dem Kabel darin besteht, das tragende Rohr (12) auf das Kabel (14) bis an die vorgesehene Stelle zu ziehen, die Basis (15) um das tragende Rohr (12) derart zu positionieren, dass sie auf dem Endrand der Hülse (13) in Anschlag kommt, und gegebenenfalls den Extraktionshebel (16) am Ende des tragenden Rohrs (12) anzubringen, indem er gedreht wird, bis die Stützränder (164) der Zwillingshebel (162) mit der Fläche der Basis (15) in Kontakt treten.

13. Verfahren nach Anspruch 11 oder 12, **dadurch gekennzeichnet, dass** der Schritt des Betätigens des Extraktionshebels (16) von dem Bediener durchgeführt wird, dessen eine Hand die Hülse (13) in fester Position hält und dessen andere Hand den Hebel (16) betätigt, damit das tragenden Rohr (12) entlang seiner Längsachse (124) derart gleitet, dass die Hülse (13) getrennt wird.

14. Verfahren nach einem der Ansprüche 11 bis 13, **dadurch gekennzeichnet, dass** der vierte Schritt des vollständigen Trennens von dem Bediener durchgeführt wird, indem er den Extraktionshebel (16) in Ausgangsposition zurückbringt und indem er mit einer Hand an dem Hebel (16) axial zieht, wohingegen die andere Hand die Hülse (13) in fester Position hält.

## Claims

1. A tooling for placing a cold-shrink protective sleeve (13) on a cable (14), including:
- a support tube (12) on which the sleeve (13) is configured to be placed such that an end zone (121) of the support tube (12) extends past the sleeve (13), the support tube (12) extending along a longitudinal axis (124),
- a support base (15) configured to at least surround the body of the support tube (12) to bear on an end edge (131) of the sleeve (13),
- a release lever (16) including a fastening area (166) making it possible to mount the lever (16) on the support tube (12), the lever being mounted rotatably about a transverse axis (165) perpendicular to the longitudinal axis (124), said lever comprising a cam configured to bear on the base (15) and slide on the support surface of the base (15) when the release lever (16) is tilted about the transverse axis (165) such that the support tube (12) translates along its longitudinal axis (124) relative to the sleeve (13).

2. The tooling according to claim 1, **characterized in that** the release lever (16) including a central frontal gripping bar (161), extended laterally by two twinned levers (162), said levers each having an end (166) including a cylindrical lug, the two lugs being configured and arranged opposite one another so as to be inserted into the diametrically opposite orifices (123), arranged in the wall of the support tube (12) near one of its ends, such that the release lever (12) is rotatable about an axis (165) perpendicular to the longitudinal axis (124) of the support tube (12), said twinned levers (162) being arranged such that each of the levers can bear, by one of its edges, on the surface of the base (15) when the latter is placed, around the support tube (12), the bearing edge of each lever (162) forming a cam that slides over the surface of the base (15) when the release lever (16) is rotating and imparts a longitudinal translational movement of the support tube (12) with respect to the base (15).

3. The tooling according to claim 2, **characterized in that** the base (15) forms a planar crown configured to at least partially surround the body of the support tube (12) and defining two rectilinear tracks (152) arranged symmetrically relative to the longitudinal axis (124) of the support tube (12), and arranged such that each of the twinned levers (162) can bear by a bearing edge (164) on one of the tracks (152) of the base (15) when the latter is placed, around the support tube (12).

4. The device according to one of claims 2 or 3, **characterized in that** the length of the end zone (121) of the support tube (12) is defined such that, when the sleeve (13) is placed, the base (15) placed around the support tube (12) and bearing on the end of the sleeve (13), the release lever (16) is arranged opposite the base (15) such that the bearing edges (164) of the twinned levers (162) remain in contact all times with the surface of the base (15) and slide along this surface when the release lever (16) is actuated in rotation from an initial position toward a final position causing a longitudinal movement of the support tube (12) relative to the base (15).

5. The device according to any one of claims 2 to 4, **characterized in that** the profile assumed by the bearing edge (164) of each of the twinned levers (162) follows a curve having a curve radius that increases over the length of the bearing edge from its free end (166) by which the lever (162) is articulated with the support tube (12), the variation of the curve radius being defined such that, when the release lever (16) is in rotation, the longitudinal translational movement imparted to the support tube (12) has a given amplitude.

6. The device according to any one of the preceding claims, **characterized in that** the release lever (16) includes a cylindrical gripping bar and two flanks, the edge of each of the flanks configured to bear on the base (15) having, over part of its length and up to the end (166) by which it is articulated with the support tube (12), a cam-forming profile defined such that, when the release lever is in rotation, the longitudinal translational movement imparted to the support tube (12) has a defined amplitude.

7. The device according to any one of claims 2 to 5, **characterized in that** the release lever is made up of a metal rod configured to form a central frontal rectilinear part (161), forming a gripping area, extended by two symmetrical lateral extensions (162), forming two twinned levers, each including a connecting segment (163), the connecting segments (163) and the frontal part (161) being arranged in a same plane, each connecting segment (163) being extended by a curved segment (164), arranged in a plane perpendicular to the plane of the connecting segment (163), forming a bearing edge with a cam-forming profile, the end of the curved segment (164) being configured to form the lug (166) inserted into the corresponding opening (123) of the support tube (12).

8. The device according to claim 7, **characterized in that** the base (15) includes, at its outer edge, lateral folds (153) oriented substantially perpendicular to the bearing surface, which are configured to keep the bearing edge (164) of each lever (162) on the track (152) on which it is configured to slide.

9. The device according to any one of the preceding claims, **characterized in that** the support tube (12) being made from a material having a sufficient elasticity, it includes a longitudinal opening making it possible, after the placement of the sleeve, to detach the cable (14).

10. The device according to one of claims 2 to 9, **characterized in that** the end of each of the twinned levers (162) forming a lug (166) inserted into the support tube (12), includes a locking washer ensuring that the end (166) of the segment (164) is kept in place in the support tube (12).

11. A method for placing a protective sleeve (13) on a cable (14) using the device according to any one of claims 1 to 10, including:
- a first step for placing the support tube (12) equipped with the sleeve (13) on the cable (14), in the provided location;
- a second step for placing the base (15) and the release lever (16) on the support tube (12);
- a third step for actuating the release lever (16);
- a fourth step for switching the release lever (16) back into its initial position;
- a fifth step for completely removing the support tube (12) outside the sleeve (13);
- a final step for removing the support tube (12) from the cable (14);
said steps being carried out by an operator.

12. The method according to claim 11, **characterized in that** the step for placing the tooling equipped with a sleeve (13) on the cable consists of slipping the support tube (12) on the cable (14) up to the provided location, positioning the base (15) around the support tube (12) such that it abuts on the end edge of the sleeve (13), and if applicable mounting the release lever (16) at the end of the support tube (12), by pivoting it until the bearing edges (164) of the twinned levers (162) come into contact with on [sic] the surface of the base (15).

13. The method according to claim 11 or 12, **characterized in that** the step for actuating of the release lever (16) is done by the operator, one of whose hands keeps the sleeve (13) in a fixed position and whose other hand actuates the lever (16) in order to slide the support tube (12) along its longitudinal axis (124) so as to separate it from the sleeve (13).

14. The method according to one of claims 11 to 13, **characterized in that** the fourth step for complete separation is done by said operator by returning the release lever (16) to the initial position and by pulling on the lever (16) axially with one hand, while the other hand keeps the sleeve (13) in a fixed position.
